(19) Europäisches Patentamt
European Patent Office
Office européen des brevets

(11) **EP 2 007 545 B1**

(12) **FASCICULE DE BREVET EUROPEEN**

(45) Date de publication et mention de la délivrance du brevet:
**29.07.2009 Bulletin 2009/31**

(21) Numéro de dépôt: **07731217.1**

(22) Date de dépôt: **29.03.2007**

(51) Int Cl.:
**B23K 26/32** *(2006.01)*   **C23C 2/26** *(2006.01)*
**B32B 15/01** *(2006.01)*

(86) Numéro de dépôt international:
**PCT/FR2007/000536**

(87) Numéro de publication internationale:
**WO 2007/125182 (08.11.2007 Gazette 2007/45)**

(54) **PROCEDE DE FABRICATION D'UNE PIECE SOUDEE A TRES HAUTES CARACTERISTIQUES MECANIQUES A PARTIR D'UNE TOLE LAMINEE ET REVETUE**

VERFAHREN ZUR HERSTELLUNG EINES GESCHWEISSTEN TEILS MIT SEHR GUTEN MECHANISCHEN EIGENSCHAFTEN AUS EINER BESCHICHTETEN SCHUTZFOLIE

METHOD FOR MANUFACTURING A WELDED COMPONENT WITH VERY HIGH MECHANICAL CHARACTERISTICS FROM A COATED LAMINATION SHEET

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **19.04.2006   PCT/FR2006/000898**

(43) Date de publication de la demande:
**31.12.2008   Bulletin 2009/01**

(73) Titulaire: **ArcelorMittal France**
**93200 Saint-Denis (FR)**

(72) Inventeurs:
• **CANOURGUES, Jean-François**
**F-60180 Nogent Sur Oise (FR)**

• **PIC, Aurélien**
**75010 Paris (FR)**
• **VERRIER, Pascal**
**62310 Fruges (FR)**
• **VIERSTRAETE, René**
**78600 Maison-Laffitte (FR)**
• **EHLING, Wolfram**
**9000 Gent (BE)**
• **THOMMES, Bernd**
**Okemos, MI 48864 (US)**

(56) Documents cités:
**EP-A1- 0 971 044        EP-A1- 1 143 029**
**JP-A- 10 168 545        US-A1- 2001 016 268**

**Description**

L'invention concerne la fabrication de tôles ou de flans d'acier revêtu destinés à être soudés puis traités thermiquement en vue d'obtenir des pièces présentant de hautes caractéristiques mécaniques ainsi qu'une bonne résistance à la corrosion.

Pour certaines applications, on cherche à réaliser des pièces en acier combinant une résistance mécanique élevée, une grande résistance aux chocs et une bonne tenue à la corrosion. Ce type de combinaison est particulièrement désirable dans l'industrie automobile où l'on recherche un allègement significatif des véhicules et une excellente capacité d'absorption d'énergie en cas de collisions. Ceci peut être notamment obtenu grâce à l'utilisation d'aciers à très hautes caractéristiques mécaniques dont la microstructure est martensitique ou bainito-martensitique : des pièces anti-intrusion, de structure, ou participant à la sécurité des véhicules automobiles telles que les traverses de pare-choc, les renforts de portière, de pied milieu ou de toit, requièrent par exemple les qualités mentionnées ci-dessus.

Le brevet EP 0971044 divulgue un procédé de fabrication où l'on approvisionne une tôle d'acier laminée à chaud ou à froid d'acier revêtu d'aluminium ou d'alliage d'aluminium. Après mise en forme pour obtenir une pièce, et avant traitement thermique à une température supérieure à $A_{c1}$, le revêtement est soumis à une élévation de température en vue de former un composé allié en surface par interdiffusion entre l'acier et le revêtement d'aluminium. Ce composé allié permet d'éviter toute décarburation du métal ainsi que toute oxydation durant le traitement thermique en four. Il élimine donc la nécessité de fours comportant une atmosphère spéciale. La présence de ce composé allié permet également d'éviter certaines opérations de surface sur les pièces traitées, telles que le grenaillage, opérations nécessaires dans le cas de tôles ne possédant pas de revêtement. On refroidit ensuite les pièces dans des conditions aptes à conférer une résistance mécanique pouvant dépasser 1500 MPa.

Par ailleurs, dans un but d'allègement des véhicules, on a développé des pièces composées de flans d'aciers de différentes compositions ou de différentes épaisseurs soudés entre eux en bout à bout en continu. Ces pièces soudées portent le nom de « flans raboutés ». Le soudage par faisceau LASER est un mode privilégié d'assemblage de ces flans, qui tire parti des caractéristiques de souplesse, de qualité et de productivité de ce procédé. Après emboutissage à froid de ces flans soudés, on obtient de la sorte des pièces présentant des propriétés de résistance mécanique, d'emboutissabilité, d'absorption de choc, variables au sein même de ces pièces. Il est ainsi possible de disposer des propriétés requises au bon endroit sans pénaliser de façon inutile ou coûteuse l'ensemble des pièces. L'application d'un procédé de fabrication tel que décrit dans le brevet EP 0971044 à des flans raboutés peut être le suivant : A partir de tôles d'aciers présentant éventuellement des compositions ou des épaisseurs différentes, ces tôles comportant un pré-revêtement métallique, on effectue un soudage pour obtenir des flans raboutés. Ces flans soudés subissent ensuite un traitement thermique pour former un composé superficiel allié puis sont emboutis à chaud et trempés. On obtient de la sorte des pièces trempées dont les épaisseurs, les caractéristiques mécaniques intrinsèques, sont variables et répondent idéalement aux exigences locales de sollicitation.

Ce mode de fabrication se heurte cependant à des difficultés importantes : lors du soudage des flans d'acier revêtu, une partie du pré-revêtement superficiel initial se trouve en effet transféré au sein de la zone fondue créée par l'opération de soudage. Ces éléments métalliques exogènes se trouvent concentrés en raison notamment de forts courants de convection dans le métal liquide. Ces éléments ségrégent notamment au sein des espaces interdendritiques où se concentre la fraction liquide la plus riche en éléments solutés. Si l'on effectue ensuite un traitement thermique d'austénitisation des flans soudés en vue d'une trempe, ces zones enrichies s'allient par interdiffusion avec le fer ou d'autres éléments de la matrice et forment des zones intermétalliques. Lors d'une sollicitation mécanique ultérieure, ces zones intermétalliques peuvent être des sites privilégiés d'amorçage de la rupture en conditions statiques ou dynamiques. La déformation globale des joints soudés après traitement thermique se trouve ainsi notablement réduite par la présence de ces zones intermétalliques résultant du soudage et du traitement ultérieur d'alliation et d'austénitisation.

Il est donc souhaitable d'éliminer la source de formation de ces zones intermétalliques, à savoir le revêtement métallique superficiel initial susceptible d'être refondu lors de l'opération de soudage en bout à bout. Mais cette élimination pose elle-même un problème important : en effet, on peut éliminer, par exemple par un procédé mécanique, la zone pré-revêtue de part et d'autre du futur joint soudé. La largeur de cette zone où le pré-revêtement est ôté doit être au moins égale à celle de la future zone refondue par soudage de façon à ne pas favoriser la formation ultérieure de zones intermétalliques. Dans la pratique, elle doit être significativement plus importante pour tenir compte d'éventuelles fluctuations de largeur de la zone fondue au cours de l'opération d'assemblage. Il existe donc après l'opération de soudage des zones de part et d'autre du joint soudé ne comportant plus de pré-revêtement métallique superficiel. Lors du traitement thermique ultérieur d'alliation et d'austénitisation, on assiste à la formation de calamine et à une décarburation au sein de ces zones situées de part et d'autre du joint soudé. Celles-ci sont des zones de corrosion préférentielle lorsque les pièces sont mises en service puisqu'elles ne sont protégées par aucun revêtement. On recherche donc un procédé de fabrication pour éviter la formation des zones intermétalliques au sein des assemblages soudés, sources d'amorçage de la rupture.

On recherche également un procédé de fabrication pour obtenir une bonne tenue à la corrosion des pièces soudées et traitées thermiquement.

On recherche également un procédé de fabrication économique, susceptible de s'intégrer sans difficulté au sein de lignes de soudage, et compatible avec les phases ultérieures d'emboutissage ou de traitement thermique.

On recherche également un produit sur lequel les opérations de soudage en bout à bout, puis de traitement thermique, d'emboutissage et de trempe, conduisent à la fabrication d'une pièce présentant une ductilité satisfaisante et une bonne résistance à la corrosion. On recherche notamment un allongement total supérieur ou égal à 4% en travers du joint soudé.

La présente invention a pour but de résoudre les problèmes évoqués ci-dessus.

Dans ce but, l'invention a pour objet une tôle constituée d'un substrat en acier et d'un pré-revêtement, le pré-revêtement étant constitué d'une couche d'alliage intermétallique en contact avec le substrat, surmontée d'une couche d'alliage métallique. Sur au moins une face pré-revêtue de la tôle, une zone située à la périphérie de la tôle est dépourvue de la couche d'alliage métallique.

Préférentiellement, le pré-revêtement est un alliage d'aluminium ou à base d'aluminium.

A titre préféré, la couche d'alliage métallique du pré-revêtement comprend, en composition pondérale, de 8 à 11 % de silicium, de 2 à 4% de fer le reste de la composition étant de l'aluminium et des impuretés inévitables.

La largeur de la zone dépourvue de la couche d'alliage métallique est préférentiellement comprise entre 0,2 et 2,2 mm.

Selon un mode préféré, la largeur de la zone dépourvue de la couche métallique, est variable.

L'épaisseur de la couche d'alliage intermétallique est comprise à titre préféré entre 3 et 10 micromètres.

Préférentiellement encore, la zone dépourvue d'alliage métallique est obtenue en éliminant partiellement par brossage la couche d'alliage métallique sur au moins une face pré-revêtue de la tôle.

Selon un mode préféré, la zone dépourvue d'alliage métallique est obtenue en éliminant partiellement au moyen d'un faisceau LASER la couche d'alliage métallique sur au moins une face pré-revêtue de ladite tôle.

L'invention a également pour objet un flan soudé obtenu à partir du soudage en bout à bout d'au moins deux tôles selon l'un des modes ci-dessus, la liaison soudée étant effectuée sur le bord contigu à la zone dépourvue de couche d'alliage métallique.

L'invention a également pour objet une pièce obtenue à partir du traitement thermique et de la déformation d'un flan soudé selon le mode ci-dessus, le pré-revêtement étant transformé sur la totalité de son épaisseur par le traitement thermique en un composé allié intermétallique assurant une protection contre la corrosion et la décarburation du substrat d'acier.

L'invention a également pour objet une tôle, un flan ou une pièce selon l'un des modes décrits ci-dessus, la composition de l'acier comprenant, les teneurs étant exprimées en poids : $0,10\% \leq C \leq 0,5\%$, $0,5\% \leq Mn \leq 3\%$, $0,1\% \leq Si \leq 1\%$, $0,01\% \leq Cr \leq 1\%$, $Ti \leq 0,2\%$, $Al \leq 0,1\%$, $S \leq 0,05\%$, $P \leq 0,1\%$, $0,0005\% \leq B \leq 0,010\%$, le reste de la composition étant constitué de fer et d'impuretés inévitables résultant de l'élaboration.

La composition de l'acier comprend préférentiellement, les teneurs étant exprimées en poids : $0,15\% \leq C \leq 0,25\%$, $0,8\% \leq Mn \leq 1,8\%$, $0,1\% \leq Si \leq 0,35\%$, $0,01\% \leq Cr \leq 0,5\%$, $Ti \leq 0,1\%$, $Al \leq 0,1\%$, $S \leq 0,05\%$, $P \leq 0,1\%$, $0,002\% \leq B \leq 0,005\%$, le reste de la composition étant constitué de fer et d'impuretés inévitables résultant de l'élaboration

L'invention a également pour objet une pièce selon l'un des modes ci-dessus, dont la microstructure de l'acier est martensitique, bainitique, ou bainito-martensitique.

L'invention a pour objet un procédé selon lequel :

- on approvisionne une tôle d'acier
- on revêt la tôle de façon à obtenir un pré-revêtement constitué d'une couche d'alliage intermétallique surmontée d'une couche d'alliage métallique,
- on enlève sur au moins une face de la tôle, la couche d'alliage métallique dans une zone à la périphérie de la tôle.

La largeur de la zone est préférentiellement comprise entre 0,2 et 2,2mm L'invention a également pour objet un procédé de fabrication d'une tôle d'acier pré-revêtue, selon lequel :

- on approvisionne une tôle d'acier
- on revêt la tôle de façon à obtenir un pré-revêtement constitué d'une couche d'alliage intermétallique surmontée d'une couche d'alliage métallique, puis
- on enlève sur au moins une face de la tôle, la couche d'alliage métallique dans une zone non totalement contiguë à la périphérie de la tôle puis,
- on découpe la tôle selon un plan de façon à ce que la zone dépourvue d'alliage métallique se trouve en périphérie de la tôle découpée.

La largeur de la zone dépourvue d'alliage métallique et non totalement contiguë à la périphérie de la tôle, est préférentiellement comprise entre 0,4 et 30 mm.

Le pré-revêtement est réalisé préférentiellement par aluminiage au trempé. L'enlèvement de la couche est réalisé préférentiellement par brossage. Selon un mode préféré, l'enlèvement de la couche est réalisé au moyen de l'impact d'un faisceau LASER sur le pré-revêtement.

L'invention a également pour objet un procédé selon l'un des modes ci-dessus dans lequel on mesure la valeur d'émissivité ou de réflectivité de la zone sur laquelle on enlève la couche d'alliage métallique, on compare la valeur mesurée avec une valeur de référence caractéristique de l'émissivité ou de la réflectivité de la couche d'alliage métallique et l'on arrête l'opération d'enlèvement lorsque la différence entre la valeur mesurée et la valeur de référence est supérieure à une valeur critique.

L'invention a également pour objet un procédé selon lequel on réalise l'enlèvement de la couche grâce à un faisceau LASER, **caractérisé en ce que** l'on mesure l'intensité ou la longueur d'onde du rayonnement émis au point d'impact du faisceau LASER, que l'on compare cette valeur mesurée avec une valeur de référence caractéristique de l'émissivité de la couche d'alliage métallique et que l'on arrête l'opération d'enlèvement lorsque la différence entre la valeur mesurée et la valeur de référence est supérieure à une valeur critique.

L'invention a également pour objet un procédé selon lequel on soude en bout à bout au moins deux tôles fabriquées selon l'un des modes ci-dessus, la liaison soudée étant effectuée sur le bord contigu à la zone de la périphérie dépourvue de couche d'alliage métallique.

Avant le soudage, la largeur de la zone dépourvue de la couche métallique située à la périphérie de la tôle, est préférentiellement supérieure de 20 à 40% à la demi-largeur du cordon de soudure.

Avant le soudage, la largeur de la zone dépourvue d'alliage métallique et non totalement contiguë à la périphérie de la tôle, est préférentiellement supérieure de 20 à 40% à la largeur d'un cordon de soudure.

L'invention a également pour objet un procédé de fabrication d'une pièce selon lequel on approvisionne un flan soudé fabriqué selon le mode ci-dessus, puis :

- on chauffe le flan de manière à former, par alliation entre le substrat d'acier et le revêtement un composé allié intermétallique et de manière à conférer une structure partiellement ou totalement austénitique à l'acier, puis
- on déforme le flan à chaud pour obtenir une pièce,
- on refroidit la pièce avec une vitesse propre à conférer les caractéristiques mécaniques visées.

La vitesse de refroidissement est préférentiellement supérieure à la vitesse critique de trempe martensitique.

Selon un mode préféré, le soudage est effectué par faisceau LASER. Préférentiellement encore, le soudage est effectué à l'arc électrique. L'invention a également pour objet l'utilisation de tôle, flan, ou de pièce selon l'un des modes ci-dessus, pour la fabrication de pièces de structures ou de sécurité pour véhicule automobile terrestre à moteur.

D'autres caractéristiques et avantages de l'invention apparaîtront au cours de la description ci-dessous donnée à titre d'exemple et faite en référence aux figures jointes suivantes :

- La figure 1 présente un exemple schématique de tôle selon l'invention, avant l'opération de soudage.
- La figure 2 présente un second exemple schématique de tôle selon l'invention.
- La figure 3 présente un exemple schématique de joint soudé bout à bout selon l'invention.
- La figure 4 présente une macrographie d'un joint soudé selon l'invention après traitement thermique d'austénitisation et d'alliation.
- La figure 5 présente une macrographie d'un joint soudé de référence faisant apparaître des zones intermétalliques néfastes au sein du métal fondu.
- La figure 6 présente une macrographie de tôle selon l'invention avant l'opération de soudage, dont l'alliage métallique a été ôté localement par faisceau LASER.

On a vu ci-dessus que l'élimination totale du revêtement métallique de part et d'autre du joint avant l'opération de soudage conduisait à des problèmes de corrosion localisée. Les inventeurs ont mis en évidence de façon surprenante que l'élimination d'une partie précise de ce revêtement permettait de résoudre les problèmes mentionnés ci-dessus.

Pour bien comprendre l'invention, on rappellera en premier lieu certaines caractéristiques des bandes ou tôles revêtues produites usuellement par immersion dans des bains de zinc ou d'aluminium fondu, ou d'alliages de zinc ou d'aluminium.

Ces procédés continus dits « au trempé » conduisent à la morphologie générale suivante des revêtements :

- A la surface du substrat d'acier de la tôle, on assiste à une précipitation d'une couche d'alliages intermétalliques d'une épaisseur de quelques micromètres, formée par réaction très rapide dès l'immersion dans le bain fondu. Ces alliages intermétalliques étant relativement fragiles, on cherche à limiter la croissance de cette couche par l'addition d'inhibiteurs au sein du bain fondu. Dans le cas de revêtement d'alliages de zinc ou d'aluminium, les alliages composant cette couche sont souvent du type $Fe_xAl_y$, notamment $Fe_2Al_5$. Dans le cas de revêtements d'alliages de zinc, la présence de cette couche intermétallique riche en aluminium s'explique par le fait que les bains de zinc contiennent souvent une faible quantité d'aluminium qui joue un rôle d'inhibition.

Cette couche d'alliages intermétalliques peut être parfois de nature complexe et se subdiviser par exemple en deux sous-couches intermétalliques, la sous-couche en contact avec le substrat étant plus riche en fer.

- Cette couche d'alliages intermétalliques est surmontée d'une couche d'alliage métallique dont la composition est très voisine de celle du bain. Une couche métallique plus ou moins importante est en effet entraînée à la sortie du bain fondu par la tôle, dont l'épaisseur peut être contrôlée au moyen de jets d'air ou d'azote.

Les inventeurs ont mis en évidence que, de façon particulièrement avantageuse, il convenait d'éliminer localement cette dernière couche afin de résoudre les problèmes mentionnés précédemment.

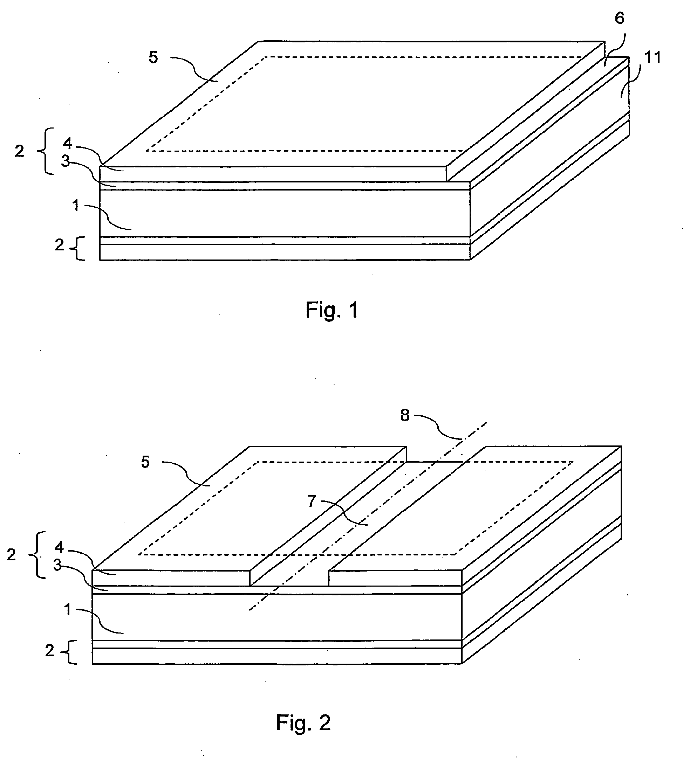

On se référera plus particulièrement à la figure 1 illustrant une tôle selon l'invention. Le terme de tôle doit être entendu dans un sens large et désigne notamment toute bande ou tout objet obtenu par découpe à partir d'une bande, d'une bobine ou d'une feuille. Cette tôle comporte deux faces et quatre bords dans ce cas particulier. L'invention n'est bien entendue pas limitée à cette géométrie rectangulaire. La figure 1 met en évidence :

- Un substrat 1 en acier. Ce substrat peut être notamment sous forme de tôle laminée à chaud ou à froid en fonction de l'épaisseur désirée, ou de toute autre forme appropriée.
- Superposé au substrat et en contact avec celui-ci, un pré-revêtement 2 est présent sur les deux faces de la pièce. Ce pré-revêtement est lui-même composé :
- d'une couche d'alliage intermétallique 3 situé au contact du substrat 1. Il s'agit comme on l'a vu d'une couche formée par réaction entre le substrat et le métal fondu du bain.

A titre avantageux, le pré-revêtement est un alliage d'aluminium ou à base d'aluminium. Ce type de pré-revêtement est en effet particulièrement bien adapté au traitement thermique ultérieur conduisant à la formation d'un composé intermétallique par interdiffusion avec le substrat 1 et, comme on le verra, à un enlèvement localisé de couche superficielle. En particulier, l'alliage métallique du pré-revêtement peut contenir de 8 à 11% en poids de silicium, de 2 à 4% de fer, le reste de la composition étant de l'aluminium et des impuretés inévitables. L'addition de silicium permet notamment de réduire l'épaisseur de la couche intermétallique 3.

- On a également fait figurer la périphérie 5 de la tôle. Selon l'invention, une partie 6 de la périphérie est dépourvue de la couche d'alliage métallique 4 mais conserve la couche d'alliage intermétallique 3. Cette partie 6 est destinée à être accostée à une autre tôle, puis à être soudée en bout à bout selon un plan défini par le bord 11 pour former un flan.
- Selon un premier mode, l'enlèvement de la couche 4 est réalisé avantageusement grâce à une opération de brossage effectué à la périphérie 5 : en effet, l'enlèvement de matière réalisé par la brosse concerne essentiellement la couche superficielle dont la dureté est la plus faible, c'est à dire la couche d'alliage métallique 4. La couche 3 plus dure sera laissée en place par le passage de la brosse. L'utilisation de pré-revêtement d'aluminium ou à base d'aluminium sera particulièrement avantageuse puisque la différence de dureté entre la couche d'alliage intermétallique 3 et la couche métallique 4, est très importante.

L'homme du métier saura adapter les différents paramètres propres à l'opération de brossage tels que le choix de la nature de la brosse, de la vitesse de rotation et de translation relative, de la pression perpendiculaire à la surface de façon à réaliser l'enlèvement de la façon la plus complète et la plus rapide en les adaptant à la nature particulière du pré-revêtement. A titre d'exemple, on pourra utiliser une brosse à lamelles montée sur un axe rotatif animé d'un mouvement de translation parallèle au bord de la partie 6.

- Selon un second mode, l'enlèvement de la couche 4 est réalisée par un faisceau LASER dirigé vers la périphérie de la tôle: L'interaction entre ce faisceau à haute densité d'énergie et le pré-revêtement provoque une vaporisation et une expulsion de la surface de ce dernier. Compte tenu des propriétés thermiques et physiques différentes entre la couche d'alliage métallique 4 et la couche intermétallique 3, les inventeurs ont mis en évidence qu'une succession d'impulsions LASER brèves avec des paramètres adaptés conduit à une ablation sélective de la couche métallique 4 en laissant en place la couche 3. L'interaction d'un faisceau LASER pulsé dirigé vers la périphérie d'une tôle revêtue, et en translation relative par rapport à cette tôle, conduit donc à un enlèvement de la couche métallique 4 en périphérie. L'homme du métier saura adapter les différents paramètres tels que le choix du faisceau LASER, de l'énergie incidente, de la durée des impulsions, de la vitesse de translation relative entre le faisceau et la tôle, et de la focalisation du faisceau sur la surface de façon à réaliser l'ablation de la façon la plus rapide et la plus complète en les adaptant à la nature particulière du pré-revêtement. A titre d'exemple, on pourra utiliser un LASER de type Q-switch, d'une puissance nominale de quelques centaines de watts et délivrant des impulsions de l'ordre d'une cinquantaine de nanosecondes. On pourra naturellement faire varier la largeur de la zone d'enlèvement 6 grâce à des ablations contigües successives.

La largeur de la zone 6 dépourvue de la couche métallique doit être ajustée de façon à permettre :

- un soudage sans introduction d'élément de pré-revêtement dans la zone fondue
- une résistance suffisante à la corrosion de l'assemblage soudé après traitement thermique ultérieur d'alliation et d'austénitisation

Les inventeurs ont mis en évidence que ces conditions étaient remplies lorsque la largeur de la zone 6 était supérieure, dans une proportion de 20% à 40%, à la demi largeur de la zone fondue créée lors du soudage bout à bout de flans.

La valeur minimale de 20% assure que le pré-revêtement n'est pas introduit dans le métal fondu lors du soudage, la valeur de 40% assure une résistance satisfaisante à la corrosion.

Tenant compte des conditions de soudage pour des tôles d'épaisseur allant de 1 à 3mm, la largeur de la zone 6 est comprise entre 0,2 et 2,2 mm.

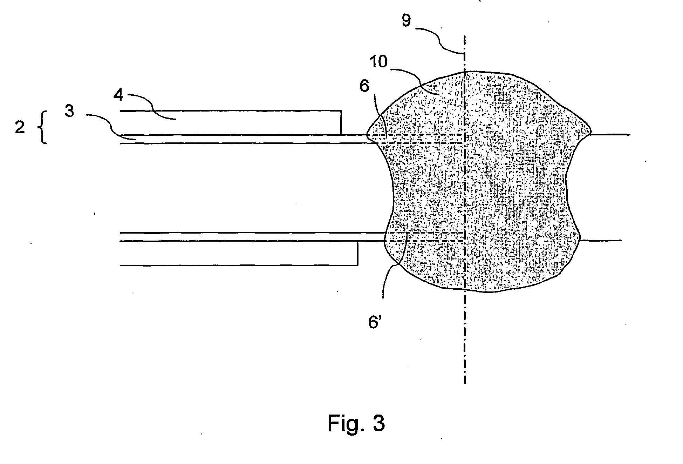

Cette situation est représentée à la figure 3 qui illustre schématiquement une coupe après soudage d'une tôle comportant un pré-revêtement 2, lui-même formé d'une couche d'alliage intermétallique 3 et d'une couche métallique 4. La zone fondue est désignée par 10, son plan axial dans le sens du soudage par 9. Les traits hachurés illustrent l'étendue initiale d'une zone 6 refondue par l'opération de soudage.

La figure 3 illustre la situation où le cordon de soudure est globalement symétrique sur les deux faces opposées de la tôle. Dans ces conditions, la largeur de la zone 6 est identique sur les deux faces. Cependant, en fonction du procédé de soudage utilisé et des paramètres de mise en oeuvre de ce procédé, le cordon peut présenter un aspect dissymétrique. Selon l'invention, la largeur de la zone 6 peut être alors coordonnée à cette dissymétrie de façon à ce que cette largeur soit légèrement supérieure à la demi largeur de la zone fondue 10 sur chacune des deux faces respectives. Dans ces conditions, la largeur de la zone 6 différera de celle de la zone 6' illustrée à la figure 3.

Dans le cas de conditions de soudage évoluant le long d'un assemblage, par exemple pour tenir compte d'une modification locale de géométrie ou d'épaisseur, la largeur de la zone 6 peut être également coordonnée à l'évolution correspondante de la variation de largeur de la zone fondue le long de la périphérie soudée de la tôle. La largeur de la zone 6 augmentera naturellement lorsque les conditions locales conduiront à la formation d'un cordon plus large.

Dans le cas du soudage de deux tôles d'épaisseur différente, comportant un revêtement, la largeur de la zone 6 peut également être différente sur la partie périphérie soudée de chacune des deux tôles.

Selon une variante de l'invention illustrée à la figure 2, on effectue l'enlèvement de la couche 4 sur une zone 7 d'une tôle revêtue, la zone d'enlèvement étant non totalement contigüe à la périphérie 5 de la tôle. On découpe ensuite la tôle selon un plan axial 8 perpendiculaire à celle-ci, par exemple par refendage. On obtient alors une tôle comme illustrée à la figure 1. La largeur de l'enlèvement est supérieure, dans une proportion de 20% à 40%, à la largeur de la zone fondue qui serait obtenue par une opération de soudage réalisée selon le plan axial 8.

Selon une variante de l'invention, la largeur de l'enlèvement est comprise entre 0,4 et 30mm. La valeur minimale correspond à une largeur permettant de réaliser, après découpe selon le plan axial 8, deux tôles présentant une zone d'enlèvement très étroite de 0,2mm sur chacune des deux tôles. La valeur maximale de 30mm correspond à une largeur d'enlèvement bien adaptée à des outils industriels pour un tel enlèvement. Une découpe ultérieure peut être effectuée, non pas sur le plan axial 8 situé au milieu de la zone d'enlèvement, mais à une localisation adaptée de façon à obtenir une tôle dont la largeur d'enlèvement est légèrement supérieure à la demi largeur de la zone fondue obtenue par une opération de soudage, définie par les conditions de l'invention.

Comme on l'a expliqué ci-dessus, les largeurs d'enlèvement permettent d'assurer à la fois le fait que le revêtement métallique n'est pas introduit dans le métal fondu lors d'un soudage ultérieur de la tôle, et la tenue à la corrosion du flan soudé après traitement thermique.

Le contrôle de l'enlèvement de la couche métallique 4 peut être effectué au moyen d'examens micrographiques. Mais on a également mis en évidence que l'on peut contrôler de façon très rapide l'efficacité de l'opération d'enlèvement par un contrôle optique : Il existe en effet une différence d'aspect entre la couche métallique 4 et la couche intermétallique sous-jacente 3, celle-ci étant de couleur plus sombre. L'opération d'enlèvement doit donc se poursuivre et être arrêtée lorsque l'on constate sur la zone 6 une modification significative de la teinte par rapport au revêtement superficiel. Il est ainsi possible de contrôler l'enlèvement par l'intermédiaire de mesure d'émissivité ou de réflectivité par spectrométrie : on éclaire la zone 6 par l'intermédiaire d'une source lumineuse, un ou plusieurs capteurs optiques étant dirigés vers cette zone. La valeur mesurée correspond à l'énergie réfléchie. On compare cette valeur avec une valeur de référence correspondant à l'émissivité ou la réflectivité de la couche métallique 4 ou avec une valeur mesurée par un autre capteur dirigé vers cette couche métallique. Il est également possible de mesurer la variation, en fonction du temps, de l'énergie réfléchie. Dans le cas où la couche 6 affleure superficiellement, l'énergie recueillie est plus faible que celle correspondant à la couche d'alliage métallique 4. Au moyen d'un calibrage préalable, on peut donc déterminer le moment précis où l'enlèvement atteint la couche 3.

Dans le cas d'un enlèvement de revêtement par ablation LASER, il est également possible d'analyser l'intensité ou la longueur d'onde du rayonnement émis au point d'impact du faisceau LASER sur la tôle pré-revêtue. On observe en effet une modification de l'intensité et de la longueur d'onde lorsque la couche 4 a été éliminée et que le faisceau LASER impacte la couche 3. Un contrôle de l'épaisseur de la couche enlevée peut donc être effectué de la manière suivante : on mesure l'intensité ou la longueur d'onde du rayonnement émis au point d'impact du faisceau LASER, on compare cette valeur mesurée avec une valeur de référence caractéristique de l'émissivité de la couche d'alliage métallique 4 et on arrête l'opération d'enlèvement lorsque la différence entre la valeur mesurée et la valeur de référence est supérieure à une valeur critique prédéterminée. Selon les contraintes spécifiques, cette étape d'enlèvement de la couche d'alliage métallique peut être mise en oeuvre à différents stades de la production, en particulier à l'un des suivants :

- Après déroulage de bobines fabriquées sur trains de laminage continus, avant le découpage sous forme de tôles de plus petit format
- Avant l'étape de soudage, sur des tôles découpées.

Dans le procédé selon l'invention, on approvisionne une tôle d'acier laminée à chaud ou à froid dé composition pondérale suivante : une teneur en carbone comprise entre 0,10 et 0,5%, et préférentiellement entre 0,15 et 0,25% en poids. Cet élément joue un grand rôle sur la trempabilité et sur la résistance mécanique obtenue après le refroidissement qui suit le traitement d'alliation et d'austénitisation des flans soudés. Au-dessous d'une teneur de 0,10% en poids, l'aptitude à la trempe est trop faible et les propriétés de résistance sont insuffisantes. Par contre, au-delà d'une teneur de 0,5 % en poids, le risque de formation de défauts est accru lors de la trempe, particulièrement pour les pièces les plus épaisses. Une teneur en carbone comprise entre 0,15 et 0,25% permet d'obtenir une résistance comprise entre 1250 et 1650MPa environ.

- Outre son rôle de désoxydant, le manganèse a également un effet important sur la trempabilité en particulier lorsque sa teneur en poids est au moins de 0,5% et préférentiellement de 0,8%. Cependant, une quantité trop importante (3% en poids, ou préférentiellement 1,8%) conduit à des risques de ségrégation excessive.
- La teneur en silicium de l'acier doit être comprise entre 0,1 et 1 % en poids, et de préférence entre 0,1 et 0,35%. Outre son rôle sur la désoxydation de l'acier liquide, cet élément contribue au durcissement. Sa teneur doit être cependant limitée pour éviter la formation excessive d'oxydes et pour favoriser la revêtabilité.
- Au delà d'une teneur supérieure à 0,01%, le chrome augmente la trempabilité et contribue à l'obtention d'une résistance importante après l'opération de formage à chaud, et cela dans les différentes parties de la pièce après le refroidissement suivant le traitement thermique d'austénitisation et d'alliation. Au delà d'une teneur égale à 1%, (préférentiellement 0,5%), la contribution du chrome à l'obtention de cette homogénéité de propriétés mécaniques est saturée.
- L'aluminium est un élément favorisant la désoxydation et la précipitation de l'azote. En quantité supérieure à 0,1 % en poids, il se forme des aluminates grossiers lors de l'élaboration, ce qui incite à en limiter la teneur à cette valeur.
- En quantités excessives, le soufre et le phosphore conduisent à une fragilité augmentée. C'est pourquoi il est préférable de limiter leur teneur respective à 0,05 et 0,1 % en poids.
- Le bore, dont la teneur doit être comprise entre 0,0005 et 0,010 % en poids, et de préférence entre 0,002 et 0,005% en poids, est un élément qui joue un rôle important sur la trempabilité. Au-dessous d'une teneur de 0,0005%, on n'obtient pas un effet suffisant sur la trempabilité. Le plein effet est obtenu pour une teneur de 0,002%. La teneur maximale en bore doit être inférieure à 0,010%, et préférentiellement 0,005%, pour ne pas dégrader la ténacité.
- Le titane a une forte affinité pour l'azote et contribue donc à protéger le bore de façon à ce que cet élément se trouve sous forme libre pour jouer son plein effet sur la trempabilité. Au-delà de 0,2%, et plus particulièrement de 0,1%, il existe cependant un risque de former des nitrures de titane grossiers dans l'acier liquide qui jouent un rôle néfaste sur la ténacité.

Après préparation des tôles selon l'un des procédés décrits ci-dessus, on assemble celles-ci par soudage de façon à obtenir un flan soudé. On peut naturellement assembler plus de deux tôles en vue de la fabrication de pièces finales complexes. Les tôles peuvent être d'épaisseur ou de composition différentes pour satisfaire localement aux propriétés requises.

Le soudage est effectué après accostage des tôles en bord à bord, les zones dépourvues de couche d'alliage métallique étant accolées entre elles. Le soudage s'effectue donc selon le bord contigu aux zones 6 dépourvues de couche d'alliage métallique.

Dans le cadre de l'invention, on pourra utiliser tout moyen de soudage continu approprié aux épaisseurs et aux conditions de productivité et de qualité requises pour les joints soudés; et notamment :

- Le soudage par faisceau LASER
- Le soudage à l'arc électrique, en particulier par les procédés TIG (« Tungsten Inert Gas), plasma, MIG (« Metal Inert Gas) ou MAG (« Metal Active Gas »)

Dans les conditions de l'invention, l'opération de soudage ne conduit pas à la refusion d'une portion du revêtement métallique 4 dont les éléments se retrouveraient ensuite dans la zone fondue. Seule une quantité minime de la couche d'alliage intermétallique 3 est refondue par cette opération au sein de la zone fondue. Comme le montrera l'exemple ci-dessous, cette quantité très limitée n'a pas d'influence sur la qualité métallurgique et les propriétés mécaniques du joint soudé après traitement thermique d'alliation et d'austénitisation.

On réchauffe ensuite le flan soudé pour réaliser conjointement :

- Un traitement d'alliation superficielle où l'on on assiste à une diffusion d'éléments du substrat d'acier, notamment du fer, du manganèse, du silicium, au sein du pré-revêtement. On forme de la sorte un composé allié intermétallique en surface dont la température de fusion est notablement plus élevée que celle de la couche d'alliage métallique 4. La présence de ce composé lors du traitement thermique permet d'éviter toute oxydation et toute décarburation de l'acier sous-jacent.
- Une austénitisation de l'acier de base, cette austénitisation pouvant être partielle ou totale. On effectue avantageusement le chauffage dans un four de telle sorte que la pièce atteigne une température comprise entre Ac1 et Ac3+100°C. Ac1 et Ac3 désignent respectivement les températures de début et de fin de transformation austénitique au chauffage. Selon l'invention, le temps de maintien à cette température est supérieur ou égale à 20s de manière à uniformiser la température et la microstructure dans les différents points de la pièce.

Dans les conditions selon l'invention, on ne forme pas, au cours de cette phase de réchauffage, de zones intermétalliques fragiles au sein du métal fondu, néfastes pour les propriétés mécaniques de la pièce.

On effectue alors une déformation à chaud du flan en vue de lui donner sa forme finale sous forme de pièce, cette étape étant favorisée par la diminution de la limite d'écoulement et l'augmentation de la ductilité de l'acier avec la température. Partant d'une structure partiellement ou totalement austénitique à haute température, on refroidit ensuite la pièce dans des conditions appropriées de façon à conférer les caractéristiques mécaniques visées : en particulier, on peut maintenir la pièce au sein d'un outillage pendant le refroidissement, l'outillage pouvant être lui même refroidi pour favoriser l'évacuation de la chaleur. Afin d'obtenir des propriétés mécaniques élevées, on visera de préférence l'obtention de microstructures martensitiques, bainitiques ou bainito-martensitiques.

Dans la zone 6 de part et d'autre du joint soudé, la couche intermétallique 3, d'épaisseur comprise entre 3 à 10 micromètres avant traitement thermique, s'allie au substrat en acier et permet d'obtenir une bonne résistance à la corrosion.

Exemple :

A titre d'exemple, les modes de réalisation suivants vont illustrer d'autres avantages conférés par l'invention. On a considéré une bande d'acier laminée à froid de 1,5mm d'épaisseur, de composition pondérale suivante :

Tableau 1 : Composition de l'acier (% poids)

| C | Mn | Si | S | P | Al | Cr | Ti | B |
|---|----|----|---|---|----|----|----|---|
| 0,224 | 1,160 | 0,226 | 0,005 | 0,013 | 0,044 | 0,189 | 0,041 | 0,0031 |

La bande d'acier a été pré-revêtue au trempé dans un bain fondu d'un alliage d'aluminium comprenant 9,3% de silicium et 2,8% de fer, le reste étant constitué d'aluminium et d'impuretés inévitables. La bande a été ensuite découpée sous forme de tôles au format de 300x 500 mm$^2$. Celles-ci comportent sur chacune de leurs faces, un pré-revêtement comprenant une couche d'alliage intermétallique comprenant majoritairement $Fe_2Al_3$, $Fe_2Al_5$ et $Fe_xAl_ySi_z$. Cette couche de 5 micromètres d'épaisseur en contact avec le substrat d'acier est surmontée par une couche d'alliage métallique Al-Si de 20 micromètres d'épaisseur. Avant soudage par faisceau LASER, quatre modalités différentes de préparation ont été mises en oeuvre :

- Modalité I (selon l'invention) : La couche d'alliage métallique Al-Si a été enlevée par brossage longitudinal sur une largeur de 1,1 mm à partir du bord des tôles, du côté de 500mm de long. Le brossage a été effectué d'une manière identique sur les deux faces au moyen d'une brosse de type « spirabande » à lamelles de diamètre 80mm montée sur un système rotatif à renvoi d'angle, le tout guidé en translation sur un banc à contrepoids. L'effort de brossage est environ 35N au niveau du contact brosse/flan, la vitesse de déplacement de la brosse de 10m/min. On élimine ainsi par brossage la couche d'alliage métallique en ne laissant subsister que la couche d'alliage intermétallique de 5 micromètres sur la zone brossée.

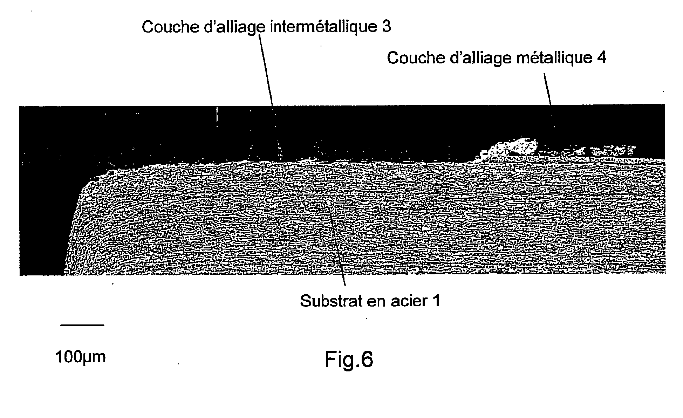

- Modalité II (selon l'invention) : La couche d'alliage métallique Al-Si a été enlevée par ablation LASER sur une largeur de 0,9 mm à partir du bord des tôles. L'ablation LASER a été effectuée d'une manière identique sur les deux faces au moyen d'un laser de type Q-switch d'une énergie nominale de 450W délivrant des impulsions de 70ns. L'énergie de pulse est de 42mJ. La vitesse constante de translation relative du faisceau LASER par rapport aux tôles est de 20m/min. La figure 6 montre que l'on élimine ainsi par ablation LASER la couche d'alliage métallique 4 en ne laissant subsister que la couche d'alliage intermétallique 3 de 5 micromètres sur la zone traitée.

- Modalité R1 (non conforme à l'invention) : On a éliminé par enlèvement mécanique l'intégralité du pré-revêtement, soit la couche d'alliage métallique ainsi que l'alliage intermétallique. Cet enlèvement a été effectué sur une largeur de 1,1 mm, donc identique à celle de la modalité I, au moyen d'un outil de type plaquette carbure pour usinage rapide, en translation longitudinale. De la sorte, le soudage ultérieur est réalisé sur une zone totalement dépourvue de pré-revêtement de part et d'autre du joint.

- Modalité R2 (non conforme à l'invention) : Le soudage LASER a été réalisé sur des tôles pré-revêtues n'ayant subi aucune préparation particulière de leur périphérie.

Ces tôles ont été soudées par faisceau LASER dans les conditions suivantes: Puissance nominale 6kW, vitesse de soudage : 4m/minute. Compte tenu de la largeur du cordon de soudure, on constate la présence, dans la modalité I d'une zone dépourvue d'alliage métallique sur une largeur d'environ 0,3 mm après réalisation des joints soudés.

Les flans soudés ont subi un traitement thermique d'alliation et d'austénitisation comportant un chauffage jusqu'à la température de 920°C, un maintien de 7 minutes étant réalisé à cette température. Ces conditions conduisent à une transformation austénitique complète de l'acier du substrat. Durant cette phase de chauffage et de maintien, on constate que le pré-revêtement à base d'aluminium-silicium forme, sur la totalité de son épaisseur, un composé intermétallique par une alliation avec l'acier de base. Ce revêtement allié à point de fusion élevé et à haute dureté présente une grande résistance à la corrosion et évite l'oxydation et la décarburation de l'acier de base sous-jacent pendant et après la phase de chauffage.

Après la phase de chauffage à 920°C, les pièces ont été déformées à chaud et refroidies.

Un refroidissement ultérieur entre outils conduit à une structure martensitique. La résistance mécanique $R_m$ du substrat d'acier obtenue après un tel traitement est supérieure à 1450 MPa.

On a ensuite caractérisé par les techniques suivantes les liaisons soudées dans les pièces ainsi obtenues :

- Des coupes micrographiques ont permis d'apprécier la présence éventuelle de zones intermétalliques au sein des joints soudés

- Des essais mécaniques de traction en travers des joints soudés sur éprouvettes de 12.5x50 mm$^2$ ont permis d'évaluer la résistance $R_m$ et l'allongement total.

- Des essais de corrosion accélérée ont été effectués selon les normes DIN 50021, 50017, 50 014. Ces essais comportent, après aspersion de brouillard salin, des cycles où alternent des phases sèches à 23°C et des phases humides à 40°C.

Les résultats de ces caractérisations sont présentés au tableau 2 :

Tableau 2 : Caractéristiques des joints soudés après traitement thermique

| Modalité | Zones intermétalliques fragiles au sein des joints soudés | Rm (MPa) | A (%) | Résistance à la corrosion |
|---|---|---|---|---|
| I (selon l'invention) | Absence | >1450MPa | ≥4% | ○ |
| II (selon l'invention) | Absence | >1450MPa | ≥4% | ○ |
| R1 (non conforme à l'invention) | Absence | >1450MPa | ≥4% | ● |

(suite)

| Modalité | Zones intermétalliques fragiles au sein des joints soudés | Rm (MPa) | A (%) | Résistance à la corrosion |
|---|---|---|---|---|
| R2 (non conforme à l'invention) | Présence | 1230 | ≤1% | ○ |

○ : Satisfaisant ● : Non satisfaisant

Dans les conditions de trempe requises après traitement thermique, la microstructure du métal de base et de la zone fondue en soudage est totalement martensitique pour les quatre modalités ci-dessus.

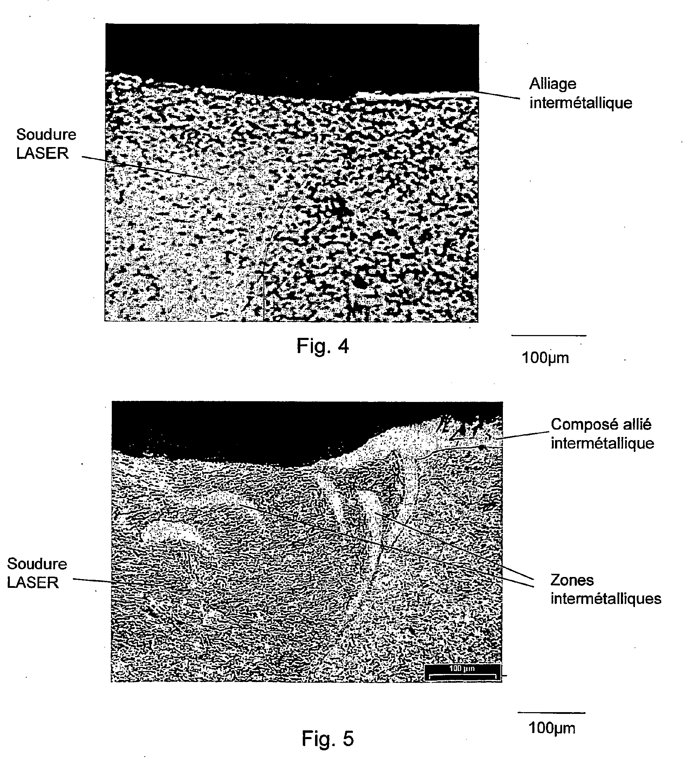

Dans le cas de la modalité I Selon l'invention, la zone fondue ne contient aucune zone intermétallique, comme le montre la figure 4.

En revanche, dans la modalité R2, on note la présence de zones intermétalliques (figure 5) en particulier vers la périphérie de la zone fondue où les éléments du pré-revêtement ont été concentrés par les mouvements spontanés de convection du bain liquide dus à un effet Marangoni. Ces zones intermétalliques de grande taille, dont l'orientation peut être sensiblement perpendiculaire à la sollicitation mécanique, jouent un rôle de concentration de contrainte et d'amorçage vis-à-vis de la rupture. L'allongement en sens travers est notablement réduit par la présence de ces zones intermétalliques : en l'absence de ces zones, l'allongement est supérieur à 4%. Il devient inférieur à 1 % lorsque celles-ci sont présentes.

On ne note pas de différences significatives de caractéristiques mécaniques (résistance et allongement) entre la modalité selon l'invention I, et la modalité R1. Ceci signifie que la fine couche d'alliage intermétallique laissée en place par le brossage et refondue par le soudage n'entraîne pas la formation de zones fragiles au sein du métal fondu, comme le montre la figure 4.

Dans le cas de la modalité R1, la résistance à la corrosion est diminuée : en effet, l'acier est mis totalement à nu de part et d'autre du joint soudé par l'enlèvement total du pré-revêtement. Faute de protection contre la corrosion, on note alors l'apparition de rouille rouge au niveau des zones affectées par la chaleur de part et d'autre du cordon.

Ainsi, le procédé selon l'invention permet d'obtenir simultanément une bonne ductilité du joint soudé après traitement ainsi qu'une bonne résistance à la corrosion.

Selon la composition de l'acier, en particulier sa teneur en carbone ainsi qu'en manganèse, chrome et bore, la résistance maximale des pièces peut être adaptée à l'utilisation visée. Ces pièces seront utilisées avec profit pour la fabrication de pièces de sécurité, et notamment de pièces anti-intrusion ou de soubassement, de barres de renforcement, de pieds milieu, pour la construction de véhicules automobiles.

**Revendications**

1. Tôle constituée d'un substrat en acier (1) et d'un pré-revêtement (2), ledit pré-revêtement étant constitué d'une couche d'alliage intermétallique (3) en contact avec ledit substrat, surmontée d'une couche d'alliage métallique (4), **caractérisée en ce que,** sur au moins une face pré-revêtue de ladite tôle, une zone (6) est dépourvue de ladite couche d'alliage métallique, ladite zone étant située à la périphérie de ladite tôle

2. Tôle selon la revendication 1, **caractérisée en ce que** ledit pré-revêtement (2) est un alliage d'aluminium ou à base d'aluminium

3. Tôle selon la revendication 2, **caractérisée en ce** la couche d'alliage métallique (4) dudit pré-revêtement (2) comprend, en composition pondérale, de 8 à 11% de silicium, de 2 à 4% de fer, le reste de la composition étant de l'aluminium et des impuretés inévitables

4. Tôle selon l'une quelconque des revendications 1 à 3, **caractérisée en ce que** la largeur de la zone (6) dépourvue de ladite couche d'alliage métallique est comprise entre 0,2 et 2,2 mm

5. Tôle selon l'une quelconque des revendications 1 à 4, **caractérisée en ce que** la largeur de ladite zone (6) dépourvue de ladite couche métallique, est variable

6. Tôle selon l'une quelconque des revendications 1 à 5, **caractérisée en ce que** l'épaisseur de ladite couche d'alliage intermétallique (3) est comprise entre 3 et 10 micromètres

7. Tôle selon l'une quelconque des revendications 1 à 6, **caractérisée en ce que** ladite zone (6) dépourvue d'alliage métallique est obtenue en éliminant partiellement par brossage la couche d'alliage métallique (4) sur au moins une face pré-revêtue de ladite tôle

8. Tôle selon l'une quelconque des revendications 1 à 6, **caractérisée en ce que** ladite zone (6) dépourvue d'alliage métallique est obtenue en éliminant partiellement au moyen d'un faisceau LASER la couche d'alliage métallique (4) sur au moins une face pré-revêtue de ladite tôle

9. Flan soudé obtenu à partir du soudage en bout à bout d'au moins deux tôles selon l'une quelconque des revendications 1 à 8, **caractérisé en que** la liaison soudée est effectuée sur le bord (11) contigu à ladite zone (6) dépourvue de couche d'alliage métallique

10. Pièce obtenue à partir du traitement thermique et de la déformation d'un flan soudé selon la revendication 9, **caractérisé en ce que** ledit pré-revêtement est transformé sur la totalité de son épaisseur par ledit traitement thermique en un composé allié intermétallique assurant une protection contre la corrosion et la décarburation dudit substrat d'acier

11. Tôle, flan ou pièce selon l'une quelconque des revendications 1 à 10, **caractérisé en ce que** la composition dudit acier comprend, les teneurs étant exprimées en poids :

$$0,10\% \leq C \leq 0,5\%$$

$$0,5\% \leq Mn \leq 3\%$$

$$0,1\% \leq Si \leq 1\%$$

$$0,01\% \leq Cr \leq 1\%$$

$$Ti \leq 0,2\%$$

$$Al \leq 0,1\%$$

$$S \leq 0,05\%$$

$$P \leq 0,1\%$$

$$0,0005\% \leq B \leq 0,010\%,$$

le reste de la composition étant constitué de fer et d'impuretés inévitables résultant de l'élaboration

12. Tôle, flan ou pièce selon la revendication 11 **caractérisé en ce que** la composition dudit acier comprend, les teneurs étant exprimées en poids :

$$0,15\% \leq C \leq 0,25\%$$

$$0,8\% \leq Mn \leq 1,8\%$$

$$0,1\% \leq Si \leq 0,35\%$$

$$0,01\% \leq Cr \leq 0,5\%$$

$$Ti \leq 0,1\%$$

$$Al \leq 0,1\%$$

$$S \leq 0,05\%$$

$$P \leq 0,1\%$$

$$0,002\% \leq B \leq 0,005\%,$$

le reste de la composition étant constitué de fer et d'impuretés inévitables résultant de l'élaboration

13. Pièce selon l'une quelconque des revendications 10 à 12 **caractérisé en ce que** la microstructure dudit acier est martensitique, bainitique, ou bainito-martensitique

14. Procédé de fabrication d'une tôle d'acier pré-revêtue, selon lequel :

- on approvisionne une tôle d'acier
- on revêt ladite tôle de façon à obtenir un pré-revêtement constitué d'une couche d'alliage intermétallique (3) surmontée d'une couche d'alliage métallique (4), **caractérisé en ce que** l'on enlève sur au moins une face de ladite tôle, ladite couche d'alliage métallique dans une zone (6) à la périphérie de ladite tôle

15. Procédé de fabrication selon la revendication 14 **caractérisé en ce que** la largeur de ladite zone (6) est comprise entre 0,2 et 2,2mm

16. Procédé de fabrication d'une tôle d'acier pré-revêtue, selon lequel :

- on approvisionne une tôle d'acier
- on revêt ladite tôle de façon à obtenir un pré-revêtement constitué d'une couche d'alliage intermétallique (3) surmontée d'une couche d'alliage métallique (4), puis
- on enlève sur au moins une face de ladite tôle, ladite couche d'alliage métallique dans une zone (7) non totalement contiguë à la périphérie (5) de ladite tôle, puis,

- on découpe ladite tôle selon un plan (8) de façon à ce que ladite zone (7) dépourvue d'alliage métallique se trouve en périphérie de ladite tôle découpée

**17.** Procédé de fabrication selon la revendication 16 **caractérisé en ce que** la largeur de ladite zone (7) est comprise entre 0,4 et 30 mm

**18.** Procédé de fabrication selon l'une quelconque des revendications 14 à 17 **caractérisé en ce qu'**on effectue ledit pré-revêtement par aluminiage au trempé

**19.** Procédé de fabrication selon l'une quelconque des revendications 14 à 18, **caractérisé en ce que** l'enlèvement de ladite couche (4) est réalisé par brossage

**20.** Procédé de fabrication selon l'une quelconque des revendications 14 à 18, **caractérisé en ce que** l'enlèvement de ladite couche (4) est réalisé au moyen de l'impact d'un faisceau LASER sur ledit pré-revêtement (2)

**21.** Procédé de fabrication d'une tôle selon l'une quelconque des revendications 14 à 20, **caractérisé en ce que** l'on mesure la valeur d'émissivité ou de réflectivité de ladite zone (6) sur laquelle on enlève ladite couche d'alliage métallique (4), que l'on compare ladite valeur mesurée avec une valeur de référence caractéristique de l'émissivité ou de la réflectivité de ladite couche d'alliage métallique (4) et que l'on arrête l'opération d'enlèvement lorsque la différence entre ladite valeur mesurée et ladite valeur de référence est supérieure à une valeur critique

**22.** Procédé de fabrication d'une tôle selon la revendication 20, **caractérisé en ce que** l'on mesure l'intensité ou la longueur d'onde du rayonnement émis au point d'impact dudit faisceau LASER, que l'on compare ladite valeur mesurée avec une valeur de référence caractéristique de l'émissivité de ladite couche d'alliage métallique (4) et que l'on arrête l'opération d'enlèvement lorsque la différence entre ladite valeur mesurée et ladite valeur de référence est supérieure à une valeur critique

**23.** Procédé de fabrication d'un flan soudé selon lequel on approvisionne au moins deux tôles selon l'une quelconque des revendications 1 à 8 ou fabriquées selon l'une quelconque des revendications 14 à 22, puis

- on soude en bout à bout les au moins deux tôles, la liaison soudée étant effectuée sur le bord (11) contigu à la zone dépourvue de couche d'alliage métallique

**24.** Procédé de fabrication selon la revendication 14 **caractérisé en ce que** la largeur de ladite zone (6) est supérieure de 20 à 40% à la demi-largeur d'un cordon de soudure réalisée selon la revendication 23

**25.** Procédé de fabrication selon la revendication 16 **caractérisé en ce que** la largeur de ladite zone (7) est supérieure de 20 à 40% à la largeur d'un cordon de soudure réalisée selon la revendication 23

**26.** Procédé de fabrication d'une pièce selon lequel on approvisionne un flan soudé fabriqué selon la revendication 23, puis

- on chauffe ledit flan de manière à former, par alliation entre ledit substrat d'acier (1) et ledit revêtement (2) un composé allié intermétallique et de manière à conférer une structure partiellement ou totalement austénitique audit acier, puis
- on déforme ledit flan à chaud pour obtenir une pièce,
- on refroidit ladite pièce avec une vitesse propre à conférer les caractéristiques mécaniques visées

**27.** Procédé selon la revendication 26 **caractérisé en ce que** ladite vitesse de refroidissement est supérieure à la vitesse critique de trempe martensitique

**28.** Procédé de fabrication selon l'une quelconque des revendications 23, 26 ou 27, **caractérisé en ce que** le soudage est effectué par faisceau LASER

**29.** Procédé de fabrication selon l'une quelconque des revendications 23, 26 ou 27, **caractérisé en ce que** le soudage est effectué à l'arc électrique

**30.** Utilisation de tôle, flan, ou pièce selon l'une quelconque des revendications 1 à 13 ou fabriqué par un procédé selon l'une quelconque des revendications 14 à 29, pour la fabrication de pièces de structures ou de sécurité pour véhicule automobile terrestre à moteur.

**Claims**

1. A plate consisting of a steel substrate (1) and a precoat (2) consisting of a layer of intermetallic alloy (3) in contact with said substrate, topped by a layer of metal alloy (4), **characterized in that,** on at least one precoated face of said plate, an area (6) situated at the periphery of said plate has said metal alloy layer removed.

2. The plate as claimed in claim 1, **characterized in that** said precoat (2) is an alloy of aluminum or based on aluminum.

3. The plate as claimed in claim 2, **characterized in that** the metal alloy layer (4) of said precoat (2) comprises, by weight, from 8 to 11% of silicon, from 2 to 4% of iron, the remainder of the compound being aluminum and inevitable impurities.

4. The plate as claimed in any one of claims 1 to 3, **characterized in that** the width of the area (6) deprived of said metal alloy layer is between 0.2 and 2.2 mm.

5. The plate as claimed in any one of claims 1 to 4, **characterized in that** the width of said area (6) deprived of said metal layer varies.

6. The plate as claimed in any one of claims 1 to 5, **characterized in that** the thickness of said intermetallic alloy layer (3) is between 3 and 10 micrometers.

7. The plate as claimed in any one of claims 1 to 6, **characterized in that** said area (6) deprived of metal alloy is obtained by partly eliminating by brushing the metal alloy layer (4) on at least one precoated face of said plate.

8. The plate as claimed in any one of claims 1 to 6, **characterized in that** said area (6) from which the metal alloy has been removed is obtained by partially eliminating by means of a laser beam the alloy layer (4) on at least one precoated face of said plate.

9. A welded blank obtained by butt-welding at least two plates as claimed in any one of claims 1 to 8, **characterized in that** the welded joint is effected on the edge (11) contiguous with said area (6) from which the metal alloy layer has been removed.

10. A part obtained by heat treatment and deformation of a welded blank as claimed in claim 9, **characterized in that** said precoat is converted throughout its thickness by said heat treatments into an intermetallic alloy compound providing protection against corrosion and decarburization of said steel substrate.

11. The plate, blank or part as claimed in any one of claims 1 to 10, **characterized in that** the composition of said steel comprises, by weight:

$$0.10\% \leq C \leq 0.5\%$$

$$0.5\% \leq Mn \leq 3\%$$

$$0.1\% \leq Si \leq 1\%$$

$$0.01\% \leq Cr \leq 1\%$$

$$Ti \leq 0.2\%$$

$$Al \leq 0.1\%$$

$$S \leq 0.05\%$$

$$P \leq 0.1\%$$

$$0.0005\% \leq B \leq 0.010\%$$

the remainder consisting of iron and inevitable impurities resulting from the production process.

**12.** The plate, blank or part as claimed in claim 11 **characterized in that** the composition of said steel comprises, by weight:

$$0.15\% \leq C \leq 0.25\%$$

$$0.8\% \leq Mn \leq 1.8\%$$

$$0.1\% \leq Si \leq 0.35\%$$

$$0.01\% \leq Cr \leq 0.5\%$$

$$Ti \leq 0.1\%$$

$$Al \leq 0.1\%$$

$$S \leq 0.05\%$$

$$P \leq 0.1\%$$

$$0.002\% \leq B \leq 0.005\%$$

the remainder consisting of iron and inevitable impurities produced by the production process.

**13.** The part as claimed in any one of claims 10 to 12, **characterized in that** the microstructure of said steel is martensitic, bainitic or bainitic-martensitic.

**14.** A method of fabricating a precoated steel plate, wherein a steel plate is coated to obtain a precoat consisting of an intermetallic alloy layer (3) topped by a metal alloy layer (4), **characterized in that** on at least one face of said plate said metal alloy layer is removed in an area (6) at the periphery of said plate.

**15.** The fabrication method as claimed in claim 14, **characterized in that** the width of said area (6) is between 0.2 and 2.2 mm.

**16.** A method of fabricating a precoated steel plate, wherein:

- a steel plate is coated to obtain a precoat consisting of an intermetallic alloy layer (3) topped by a metal alloy layer (4), then
- on at least one face of said plate said metal alloy layer is removed in an area (7) not totally contiguous with the periphery (5) of said plate, then
- said plate is cut in a plane (8) so that said area (7) from which the metal alloy has been removed is at the periphery of said cut plate.

17. The fabrication method as claimed in claim 16, **characterized in that** the width of said area (7) is between 0.4 and 30 mm.

18. The fabrication method as claimed in any one of claims 14 to 17, **characterized in that** said precoating is effected by dip coating with aluminum.

19. The fabrication method as claimed in any one of claims 14 to 18, **characterized in that** said layer (4) is removed by brushing.

20. The fabrication method as claimed in any one of claims 14 to 18, **characterized in that** said layer (4) is removed by the impact of a laser beam on said precoat (2).

21. The plate fabrication method as claimed in any one of claims 14 to 20, **characterized in that** the emissivity or reflectivity of said area (6) over which said metal alloy layer (4) is removed is measured, the measured value is compared with a reference value characteristic of the emissivity or reflectivity of said metal alloy layer (4), and the removal operation is stopped when the difference between said measured value and said reference value is above a critical value.

22. The plate fabrication method as claimed in claim 20, **characterized in that** the intensity or wavelength of the radiation emitted at the point of impact of said laser beam is measured, said measured value is compared with a reference value characteristic of the emissivity of said metal alloy layer (4), and the removal operation is stopped when the difference between said measured value and said reference value is above a critical value.

23. A welded blank fabrication method wherein at least two plates as claimed in any one of claims 1 to 8 or fabricated as claimed in any one of claims 14 to 22 are butt-welded, the welded joint being effected on the edge (11) contiguous with the area from which the metal alloy layer has been removed.

24. The fabrication method as claimed in claim 14, **characterized in that** the width of said area (6) is 20 to 40% greater than half the width of a weld produced in accordance with claim 23.

25. The fabrication method as claimed in claim 16, **characterized in that** the width of said area (7) is 20 to 40% greater than the width of a weld produced in accordance with claim 23.

26. A part fabrication method wherein a welded blank fabricated as claimed in claim 23 is heated to form, by alloying between said steel substrate (1) and said coating (2), an intermetallic alloy compound, and so as to confer a partially or totally austenitic structure on said steel, then

    - said blank is hot deformed to obtain a part,
    - said part is cooled at a rate adapted to confer the target mechanical characteristics.

27. The method as claimed in claim 26, **characterized in that** said rate of cooling is above the critical rate for martensitic quenching.

28. The fabrication method as claimed in any one of claims 23, 26 or 27, **characterized in that** the welding is effected by a laser beam.

29. The fabrication method as claimed in any one of claims 23, 26 or 27, **characterized in that** the welding is defected by an electrical arc.

30. The use of plate, blank or part as claimed in any one of claims 1 to 13 or fabricated by a method as claimed in any one of claims 14 to 29 for the fabrication of structural or safety parts for motorized terrestrial automotive vehicles.

**Patentansprüche**

1. Blech, das aus einem Stahlsubstrat (1) und einer Vorbeschichtung (2) gebildet ist, wobei die Vorbeschichtung aus einer Schicht (3) einer intermetallischen Legierung in Kontakt mit dem Substrat, gekrönt mit einer Schicht (4) einer metallischen Legierung, gebildet ist, **dadurch gekennzeichnet, dass** auf mindestens einer vorbeschichteten Fläche des Blechs eine Zone (6) ohne die Schicht der metallischen Legierung ist, wobei die Zone am Umfang des Blechs liegt.

2. Blech nach Anspruch 1, **dadurch gekennzeichnet, dass** die Vorbeschichtung (2) eine Legierung aus Aluminium oder auf der Basis von Aluminium ist.

3. Blech nach Anspruch 2, **dadurch gekennzeichnet, dass** die Schicht (4) der metallischen Legierung der Vorbeschichtung (2) in der Gewichtszusammensetzung 8 bis 11 % Silicium, 2 bis 4 % Eisen umfasst, wobei der Rest der Zusammensetzung Aluminium und unvermeidliche Verunreinigungen sind.

4. Blech nach einem der Ansprüche 1 bis 3, **dadurch gekennzeichnet, dass** die Breite der Zone (6) ohne die Schicht der metallischen Legierung zwischen 0,2 und 2,2 mm liegt.

5. Blech nach einem der Ansprüche 1 bis 4, **dadurch gekennzeichnet, dass** die Breite der Zone (6) ohne die metallische Schicht variabel ist.

6. Blech nach einem der Ansprüche 1 bis 5, **dadurch gekennzeichnet, dass** die Dicke der Schicht (3) der intermetallischen Legierung zwischen 3 und 10 Mikrometer liegt.

7. Blech nach einem der Ansprüche 1 bis 6, **dadurch gekennzeichnet, dass** die Zone (6) ohne metallische Legierung durch teilweises Beseitigen der Schicht (4) der metallischen Legierung durch Bürsten auf mindestens einer vorbeschichteten Fläche des Blechs erhalten wird.

8. Blech nach einem der Ansprüche 1 bis 6, **dadurch gekennzeichnet, dass** die Zone (6) ohne metallische Legierung durch teilweises Beseitigen der Schicht (4) der metallischen Legierung mittels eines LASER-Strahls auf mindestens einer vorbeschichteten Fläche des Blechs erhalten wird.

9. Geschweißte Scheibe, die durch Stumpfnahtschweißen von mindestens zwei Blechen nach einem der Ansprüche 1 bis 8 erhalten wird, **dadurch gekennzeichnet, dass** die Schweißverbindung an dem an die Zone (6) ohne Schicht der metallischen Legierung angrenzenden Rand (11) bewirkt wird.

10. Teil, das durch Wärmebehandlung und Verformung einer geschweißten Scheibe nach Anspruch 9 erhalten wird, **dadurch gekennzeichnet, dass** die Vorbeschichtung auf der Gesamtheit ihrer Dicke durch die Wärmebehandlung in eine intermetallische legierte Zusammensetzung transformiert wird, die einen Schutz gegen die Korrosion und die Entkohlung des Stahlsubstrats sicherstellt.

11. Blech, Scheibe oder Teil nach einem der Ansprüche 1 bis 10, **dadurch gekennzeichnet, dass** die Zusammensetzung des Stahls umfasst, wobei die Gehalte auf das Gewicht bezogen ausgedrückt sind:

$$0,10\ \% \leq C \leq 0,5\ \%$$

$$0,5\ \% \leq Mn \leq 3\ \%$$

$$0,1\ \% \leq Si \leq 1\ \%$$

$$0,01\ \% \leq Cr \leq 1\ \%$$

$$Ti \leq 0,2 \ \%$$

$$Al \leq 0,1 \ \%$$

$$S \leq 0,05 \ \%$$

$$P \leq 0,1 \ \%$$

$$0,0005 \ \% \leq B \leq 0,010 \ \%,$$

wobei der Rest der Zusammensetzung aus Eisen und unvermeidlichen Verunreinigungen, die sich aus der Erschmelzung ergeben, gebildet ist.

**12.** Blech, Scheibe oder Teil nach Anspruch 11, **dadurch gekennzeichnet, dass** die Zusammensetzung des Stahls umfasst, wobei die Gehalte auf das Gewicht bezogen ausgedrückt sind:

$$0,15 \ \% \leq C \leq 0,25 \ \%$$

$$0,8 \ \% \leq Mn \leq 1,8 \ \%$$

$$0,1 \ \% \leq Si \leq 0,35 \ \%$$

$$0,01 \ \% \leq Cr \leq 0,5 \ \%$$

$$Ti \leq 0,1 \ \%$$

$$Al \leq 0,1 \ \%$$

$$S \leq 0,05 \ \%$$

$$P \leq 0,1 \ \%$$

$$0,002 \ \% \leq B \leq 0,005 \ \%,$$

wobei der Rest der Zusammensetzung aus Eisen und aus unvermeidlichen Verunreinigungen, die sich aus der Erschmelzung ergeben, gebildet ist.

**13.** Teil nach einem der Ansprüche 10 bis 12, **dadurch gekennzeichnet, dass** die Mikrostruktur des Stahls martensitisch, bainitisch oder bainitisch-martensitisch ist.

**14.** Verfahren zur Herstellung eines vorbeschichteten Stahlblechs, gemäß dem:

- ein Stahlblech geliefert wird,
- das Blech beschichtet wird, um eine Vorbeschichtung zu erhalten, die aus einer Schicht (3) einer intermetallischen Legierung, gekrönt mit einer Schicht (4) einer metallischen Legierung, gebildet ist, **dadurch gekennzeichnet, dass** auf mindestens einer Fläche des Blechs die Schicht der metallischen Legierung in einer Zone (6) am Umfang des Blechs entfernt wird.

**15.** Herstellungsverfahren nach Anspruch 14, **dadurch gekennzeichnet, dass** die Breite der Zone (6) zwischen 0,2 und 2,2 mm liegt.

**16.** Verfahren zur Herstellung eines vorbeschichteten Stahlblechs, gemäß dem:

- ein Stahlblech geliefert wird
- das Blech beschichtet wird, um eine Vorbeschichtung zu erhalten, die aus einer Schicht (3) einer intermetallischen Legierung, gekrönt mit einer Schicht (4) einer metallischen Legierung, gebildet ist, dann
- auf mindestens einer Fläche des Blechs die Schicht der metallischen Legierung in einer Zone (7), die an den Umfang (5) des Blechs nicht vollständig angrenzt, entfernt wird, dann
- das Blech entlang einer Ebene (8) geschnitten wird, so dass die Zone (7) ohne metallische Legierung sich am Umfang des geschnittenen Blechs befindet.

**17.** Herstellungsverfahren nach Anspruch 16, **dadurch gekennzeichnet, dass** die Breite der Zone (7) zwischen 0,4 und 30 mm liegt.

**18.** Herstellungsverfahren nach einem der Ansprüche 14 bis 17, **dadurch gekennzeichnet, dass** die Vorbeschichtung durch Aluminiumbedampfung im Tauchbad durchgeführt wird.

**19.** Herstellungsverfahren nach einem der Ansprüche 14 bis 18, **dadurch gekennzeichnet, dass** die Entfernung der Schicht (4) durch Bürsten ausgeführt wird.

**20.** Herstellungsverfahren nach einem der Ansprüche 14 bis 18, **dadurch gekennzeichnet, dass** die Entfernung der Schicht (4) mittels des Auftreffens eines LASER-Strahls auf die Vorbeschichtung (2) ausgeführt wird.

**21.** Verfahren zur Herstellung eines Blechs nach einem der Ansprüche 14 bis 20, **dadurch gekennzeichnet, dass** der Wert des Emissionsvermögens oder Reflexionsvermögens der Zone (6), in der die Schicht (4) der metallischen Legierung entfernt wird, gemessen wird, der gemessene Wert mit einem Referenzwert verglichen wird, der für das Emissionsvermögen oder Reflexionsvermögen der Schicht (4) der metallischen Legierung charakteristisch ist, und der Entfernungsvorgang angehalten wird, wenn die Differenz zwischen dem gemessenen Wert und dem Referenzwert größer ist als ein kritischer Wert.

**22.** Verfahren zur Herstellung eines Blechs nach Anspruch 20, **dadurch gekennzeichnet, dass** die Intensität oder die Wellenlänge der am Auftreffpunkt des LASER-Strahls emittierten Strahlung gemessen wird, der gemessene Wert mit einem Referenzwert verglichen wird, der für das Emissionsvermögen der Schicht (4) der metallischen Legierung charakteristisch ist, und der Entfernungsvorgang angehalten wird, wenn die Differenz zwischen dem gemessenen Wert und dem Referenzwert größer ist als ein kritischer Wert.

**23.** Verfahren zur Herstellung einer geschweißten Scheibe, gemäß dem mindestens zwei Bleche nach einem der Ansprüche 1 bis 8 oder, die gemäß einem der Ansprüche 14 bis 22 hergestellt sind, geliefert werden, dann die mindestens zwei Bleche stumpf geschweißt werden, wobei die Schweißverbindung an dem an die Zone ohne Schicht der metallischen Legierung angrenzenden Rand (11) bewirkt wird.

**24.** Herstellungsverfahren nach Anspruch 14, **dadurch gekennzeichnet, dass** die Breite der Zone (6) um 20 bis 40 % größer als die halbe Breite einer gemäß Anspruch 23 ausgeführten Schweißnaht ist.

**25.** Herstellungsverfahren nach Anspruch 16, **dadurch gekennzeichnet, dass** die Breite der Zone (7) um 20 bis 40 % größer als die Breite einer gemäß Anspruch 23 ausgeführten Schweißnaht ist.

**26.** Verfahren zur Herstellung eines Teils, gemäß dem eine gemäß Anspruch 23 hergestellte geschweißte Scheibe geliefert wird, dann

- die Scheibe erhitzt wird, um durch Legierung zwischen dem Stahlsubstrat (1) und der Beschichtung (2) eine intermetallische legierte Zusammensetzung zu bilden und um dem Stahl eine teilweise oder vollständig austenitische Struktur zu verleihen, dann
- die Scheibe warm verformt wird, um ein Teil zu erhalten,
- das Teil mit einer Geschwindigkeit abgekühlt wird, die die gezielten mechanischen Eigenschaften verleihen kann.

27. Verfahren nach Anspruch 26, **dadurch gekennzeichnet, dass** die Abkühlgeschwindigkeit größer ist als die kritische Geschwindigkeit der martensitischen Härtung.

28. Herstellungsverfahren nach einem der Ansprüche 23, 26 oder 27, **dadurch gekennzeichnet, dass** das Schweißen mit einem LASER-Strahl durchgeführt wird.

29. Herstellungsverfahren nach einem der Ansprüche 23, 26 oder 27, **dadurch gekennzeichnet, dass** das Schweißen mit einem Lichtbogen durchgeführt wird.

30. Verwendung eines Blechs, einer Scheibe oder eines Teils nach einem der Ansprüche 1 bis 13 oder hergestellt durch ein Verfahren nach einem der Ansprüche 14 bis 29 für die Herstellung von Struktur- oder Sicherheitsteilen für ein Bodenkraftfahrzeug mit Motor.

Fig. 1

Fig. 2

Fig. 3

Alliage
intermétallique

Soudure
LASER

Fig. 4

100µm

Composé allié
intermétallique

Soudure
LASER

Zones
intermétalliques

Fig. 5

100µm

Couche d'alliage intermétallique 3

Couche d'alliage métallique 4

Substrat en acier 1

100µm

Fig.6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0971044 A